# EUROPEAN PATENT APPLICATION

(11) **EP 2 806 179 A1**
(43) Date of publication of application: **26.11.2014**
(21) Application number: 13739131.4
(22) Date of filing: 09.01.2013
(51) Int. Cl.: F16C 33/78, F16C 19/06

(54) **ROLLER BEARING**

(30) Priority: 16.01.2012 JP 2012006166
(71) Applicant: NTN Corporation, Osaka-shi, Osaka 550-0003 (JP)
(72) Inventor: SASAKI, Katsuaki, Iwata-shi Shizuoka 438-0037 (JP); KAGEYAMA, Kyouhei, Iwata-shi Shizuoka 438-0037 (JP)
(74) Representative: Behrmann, Niels
(86) International application number: PCT/JP2013/050143
(87) International publication number: WO 2013/108672

(57) **Abstract**

A seal lip portion 9 includes a lip main body (9a) and a projecting section (16) protruding from a peripheral edge of the lip main body (9a) and slidingly engageable with an inner ring (1), and this projecting section (16) is made of a highly frictionally wearable material which allows the projecting section (16), when frictionally worn, to establish a non-contact or a light contact to such an extend as to result in a contact pressure that can be regarded as zero. A fitting section (13) fitted into a seal mounting groove (2b) in a seal member main body (8) is held in a drag-rotation preventive structure that prevents circumferential movement due to a drag-rotation relative to an outer ring (2).

## Description

### CROSS REFERENCE TO THE RELATED APPLICATION

This application is based on and claims Convention priority to Japanese patent application No. 2012-006166, filed January 16, 2012, the entire disclosure of which is herein incorporated by reference as a part of this application.

### BACKGROUND OF THE INVENTION

### (Field of the Invention)

The present invention relates to a rolling bearing assembly used in, for example, a transmission of an automotive vehicle.

### (Description of Related Art)

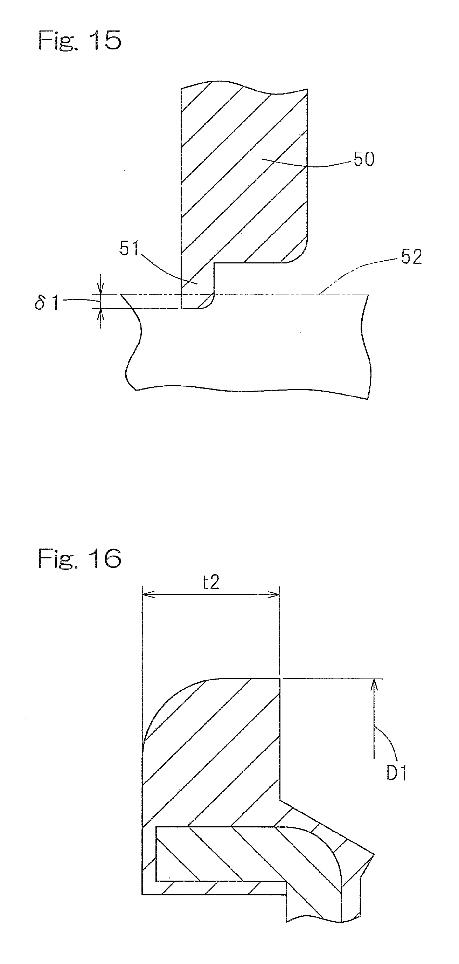

Since within the transmission used in automotive vehicles, foreign matter such as, for example, wearable particles produced by the frictional wear of gears are mixed in, the conventional bearing assembly for use in the transmission has a contact type sealing plate (seal member) set therein. Where a bearing space is sealed with such a contact type seal member, ingress of the foreign matter into the bearing assembly may be avoided, but a sealing torque is generated. In view of the above, the applicant of the instant application has suggested in, for example, the patent document 1 listed below, an item that may contribute to the fuel saving technique for the automotive vehicles by applying to the bearing assembly for the transmission, a low torque seal 50 of a highly frictionally wearable property which concurrently have a resistance to the foreign matter and a low frictional property as shown in Fig. 15. The low torque seal 50 has a lip tip end portion 51, which is made of a highly frictionally wearable rubber material, and this lip tip end portion 51 contacts a raceway ring peripheral surface 52, which faces the lip tip end portion 51, with a lip interference δ1 defined therebetween. The frictional wear of the lip tip end portion 51 during the operation of the bearing assembly results in reduction of the torque and, also, increases the resistance to ingress of the foreign matter.

### [Prior Art Literature]

Patent Document 1: JP Laid-open Patent Publication No. 2010-112472

### DISCLOSURE OF THE INVENTION

Since the conventional contact type seal member is designed for low torque, the torque of the seal lip is low from the initial stage of operation, but the low torque seal 50, to which an easily wearable rubber material, for example, is adopted, the seal lip torque at the initial stage of operation is high and, when the outer ring dragging torque is at the minimum value, there is possibility that a seal outer diametric portion may move in a circumferential direction as a result of the drag-rotation relative to the outer ring.

In view of the foregoing, the present invention has for its primary object to provide a rolling bearing assembly of a type in which the lip tip end part can be assuredly allowed to frictionally worn by preventing the movement in the circumferential direction under the drag-rotation relative to a raceway ring, to which a seal member is fixed during the operation of the bearing assembly.

A rolling bearing assembly in accordance with the present invention includes an inner ring and an outer ring, a plurality of rolling elements interposed between a raceway in the inner ring and a raceway in the outer ring, and a seal member to seal a bearing space that is delimited between the inner and outer rings; the seal member including a seal member main body having its base end portion fixedly press-fitted into a seal mounting groove defined in one of the raceway rings, which is either the inner ring or the outer ring, and the seal member main body having a tip end provided with a seal lip portion that contacts the other of the raceway rings; the seal lip portion including a lip main body section and a projecting section protruding in a radial direction from a peripheral edge of the lip main body section and slidingly contacting the other of the raceway rings, and the projecting section being made of a highly frictionally wearable material which wears, when the bearing assembly is used in a rotating condition, to form a non-contact or a light contact of a contact pressure substantially equal to zero, in which a fitting section of the seal member main body, which is fitted into the seal mounting groove has a drag-rotation preventive fitting structure that prevents a circumferential movement relative to the one of the raceway rings, as a result of a drag-rotation during the sliding contact of the projecting section.

According to the configuration, the seal member, which is a contact type at the initial stage, becomes a seal member of a non-contact type or a light contact type as a result of frictional wear after the operation. In other words, the use of the bearing assembly in a rotating condition results in a frictional wear of the projecting section of the seal lip portion. During this bearing operation, since the fitting section fitted into the seal mounting groove is designed to be set in the drag-rotation preventing scheme in which at the time of sliding contact of the projecting section, no circumferential movement caused by a drag-rotation relative to the one of the raceway rings does not occur, the constraining force of the seal member can be increased. Accordingly, even when the sealing lip torque is high, the fitting section of the seal member main body maintains in a condition fitted into the seal mounting groove defined in the one of the raceway rings. Accordingly, during the bearing operation, the projecting section of the seal lip portion can be caused to frictionally wear by the other of the raceway rings to be relatively and assuredly move in the circumferential direction relative to the projecting section of the seal lip portion. Accordingly, not only can the reduction of the torque be accomplished, but also the capability of preventing the ingress of the foreign matter be enhanced.

The base end portion of the seal member main body of the seal member may include a thick-walled section continued to a radially intermediate portion of the seal member main body and the fitting section extending radially from the thick-walled section, and the seal member main body may include a core metal, the core metal being provided with a fitting section-embedded segment that is embedded in the fitting section to form the drag-rotation preventive structure. Since the fitting section-embedded segment embedded in the fitting section is provided in the core metal, the rigidity of the entire base end portion of the seal member main body can be increased. Thereby, it becomes possible to increase the constraining force of the seal member as compared with that in the conventional technique.

The thick-walled section of the base end portion may have a sectional shape narrowing to taper as it goes towards the fitting section and the fitting section may include a connecting segment continued from the thick-walled section so as to extend radially and having a wall thickness equal to a minimum axial wall thickness of the thick-walled section, a thick-walled fitting section extending radially from the connecting segment and formed to have a wall thickness greater than that of the connecting segment. It is to be noted that the term "section" should be understood as meaning a plane appearing when the seal member or the rolling bearing assembly is cut along a plane containing a bearing axis. By this structural feature, the thick walled fitting section of the fitting section is fixed to the seal mounting groove firmly in a press-fitted condition. Accordingly, it becomes possible to increase the constraining force of the seal member as compared with that in the conventional technique.

The core metal may include a thick-walled section embedded segment that is embedded in the thick-walled section, and a fitting section-embedded segment that is integral with the thick-walled section embedded segment and embedded in the fitting section, each of the thick-walled section embedded segment and the fitting section-embedded segment having a sectional shape inclined towards the inside of the bearing assembly as it goes towards a tip end. Because of the thick-walled section embedded segment and the mounting pat embedded part having such an inclined sectional shape, the rigidity of the base end portion of the seal member main body can be increased. Accordingly, it becomes possible to increase the constraining force of the seal member as compared with that in the conventional technique.

The core metal may include a thick-walled section embedded segment that is embedded in the thick-walled section, and a fitting section-embedded segment that is integral with the thick-walled section embedded segment and embedded in the fitting section, the thick-walled section embedded segment having a sectional shape that is inclined towards the inside of the bearing assembly as it goes towards the fitting section-embedded segment while the fitting section-embedded segment having a sectional shape of an upright wall shape extending radially towards a tip end. Since in particular the fitting section-embedded segment having the sectional shape similar to the upright plate is embedded in the fitting section, the rigidity of the base end portion of the seal member main body can be increased. Hence, it becomes possible to increase the constraining force of the seal member as compared with that in the conventional technique.

The fitting section may have an axial thickness chosen to be within a range of 70 to 95 % of the widthwise dimension of an open edge of the seal mounting groove. The fitting section may have an outer diametric dimension chosen to be within a range of equal to or greater than 90 % and smaller than 100 % of a diametric dimension of a groove bottom of the seal mounting groove.

The seal lip portion may be of a shape contacting the other of the raceway rings in a radial direction. Alternatively, the seal lip portion may be of a shape contacting the other of the raceway rings in an axial direction.

The highly frictionally wearable material referred to above may be a rubber material or a resinous material. The highly frictionally wearable material referred to above may be a rubber material, in which case the seal member is formed by vulcanizing and molding the rubber material.

In one embodiment, a suction preventing unit may be provided in the seal member to prevent the seal member from being sucked and adhering to the other of the raceway rings. This suction preventing unit may be a ventilating slit provided in, for example, a tip of the seal member. When a seal member of a contact type is provided, it may occur that due to the reduction in bearing internal pressure, such seal member is sucked onto the other raceway ring, accompanied by increase of the torque. While in the practice of the present invention, the projecting section of the seal lip portion is a highly frictionally wearable material, by the time the seal member undergoes a frictional wear, the absorbing phenomenon occurs in a manner similar with the standard contact seal. The provision of the suction preventing unit such as, for example, the slit is effective to avoid the absorption before the seal member undergoes the frictional wear and the increase of the torque may be therefore avoided.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal sectional view of a rolling bearing assembly designed in accordance with a first embodiment of the present invention;
Fig. 2 is a fragmentary longitudinal sectional view showing a portion of the rolling bearing assembly in the vicinity of a seal member used therein;
Fig. 3 is a fragmentary longitudinal sectional view showing, on an enlarged scale, a base end portion of a seal member main body of the seal member shown in Fig. 2;
Fig. 4 is a fragmentary longitudinal sectional view showing, on an enlarged scale, a seal lip portion of the seal member shown in Fig. 2;
Fig. 5A is a fragmentary enlarged sectional view showing the seal lip portion held in a condition contacting an inner ring;
Fig. 5B is an enlarged sectional view showing the seal lip portion in a condition in which a projecting section of the seal lip portion is caused to frictionally wear when the bearing assembly is used in a rotating condition;
Fig. 5C is an enlarged sectional view showing the seal lip portion in a condition where a labyrinth gap is formed upon completion of the frictional wear of the seal lip portion;
Fig. 6 is a longitudinal sectional view showing a seal forming mold assembly used to form the seal member;
Fig. 7 is a longitudinal sectional view showing the base end portion of the seal member designed in accordance with a second embodiment of the present invention;
Fig. 8 is a longitudinal sectional view showing the base end portion of the seal member designed in accordance with a third embodiment of the present invention;
Fig. 9 is a longitudinal sectional view showing the base end portion of the seal member designed in accordance with a fourth embodiment of the present invention;
Fig. 10 is a longitudinal sectional view showing the base end portion of the seal member designed in accordance with a fifth embodiment of the present invention;
Fig. 11 is a longitudinal sectional view showing the base end portion of the seal member designed in accordance with a sixth embodiment of the present invention;
Fig. 12 is a longitudinal sectional view showing the base end portion of the seal member designed in accordance with a seventh embodiment of the present invention;
Fig. 13 is a longitudinal sectional view showing the base end portion of the seal member designed in accordance with an eighth embodiment of the present invention;
Fig. 14 is a schematic diagram showing an example of use of the rolling bearing assembly, designed in accordance with any one of the embodiments of the present invention, in a transmission;
Fig. 15 is a schematic longitudinal sectional view showing the seal lip portion in the conventional example; and
Fig. 16 is a longitudinal sectional view showing, on an enlarged scale, of a base end portion of the seal member in the conventional example.

### DESCRIPTION OF EMBODIMENTS

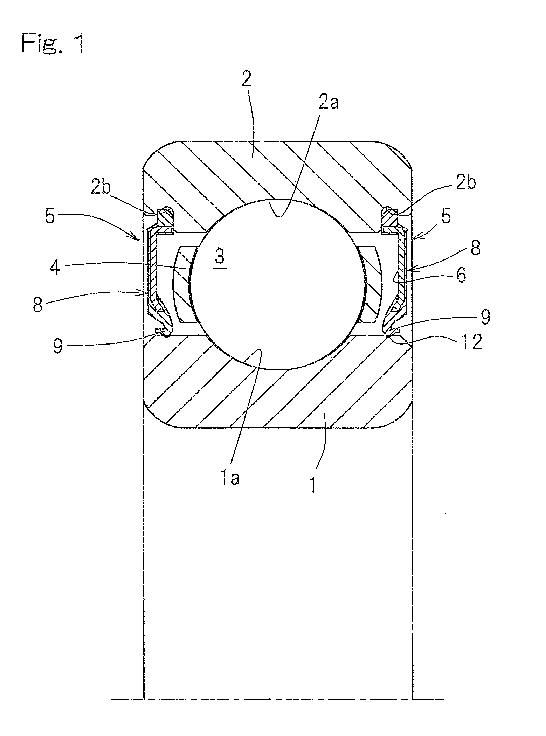

A first embodiment of the present invention will be described in detail with particular reference to Figs. 1 to 6. A rolling bearing assembly according to this embodiment is used in, for example, a transmission for automotive vehicles. As shown in Fig. 1, the rolling bearing assembly includes a plurality of rolling elements 3 interposed between a raceway 1a of an inner ring and a raceway 1b of an outer ring, which are raceway rings. The inner and outer rings 1 and 2 and the rolling elements 3 are made of a high carbon chrome bearing steel, such as, for example, SUJ 2 or the like, or martensite based stainless steel or the like. It is to be noted that the present invention is not limited to the use of such specific steel material. The rolling elements 3 are provided in a retainer 4 for retaining them and an annular bearing space delimited between the inner and outer rings 1 and 2 have its opposite ends sealed by respective seal members 5. A grease is initially filled within the bearing assembly. This rolling bearing assembly is in the form of a deep groove ball bearing having the rolling elements 3 employed in the form of balls and, in this instance, is of an inner ring rotating type in which the inner ring 1 serves as a rotatable ring while the outer ring 2 serves as a stationary ring. It is, however, to be noted that an angular contact ball bearing may be used as a seal equipped bearing assembly. Also, an outer ring rotating type, in which the inner ring 1 and the outer ring 2 serve the stationary ring and the rotatable ring, may be employed in this embodiment.

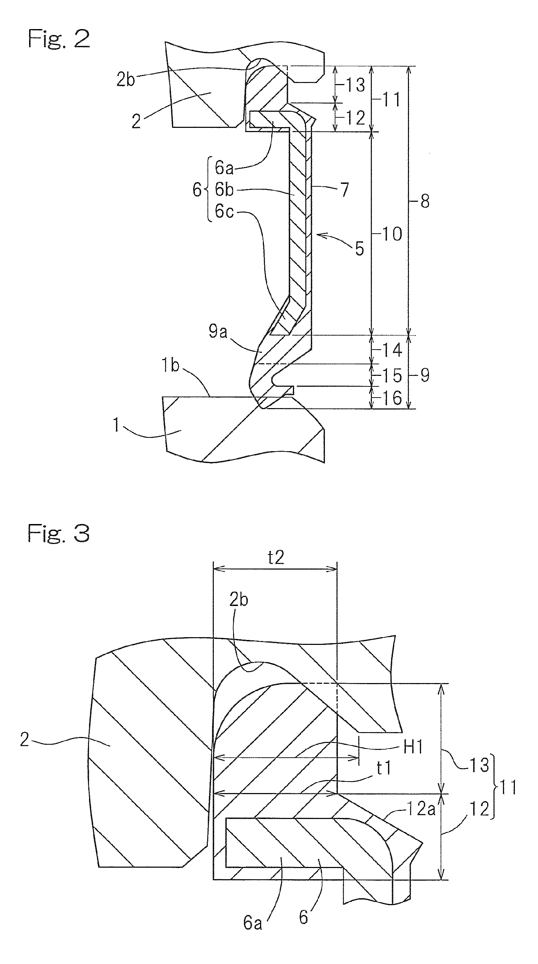

As shown in Fig. 2, the outer ring 2 has an inner peripheral surface formed with a seal mounting groove 2b into which an annular seal member 5 is fixedly fitted in a press-fitting fashion. The seal member 5 includes an annular core metal 6 and an elastic member 7 fixed integrally with the core metal 6. The core metal 6 and a major portion of the elastic member 7 cooperate with each other to define a seal member main body 8. The seal member main body 8 includes a radially intermediate portion 10 and a base end portion 11 continued to the intermediate portion 10. A seal lip portion 9 is provided at a tip (an inner peripheral side part of the elastic member 7 in this instance) of the seal member main body 8. This seal lip portion 9 is so shaped as to contact the inner ring 1 in a radial direction. Also, in this instance, the elastic member 7 is so designed that except for an inner side face of an upright portion 6b of the core metal 6, the entire core metal 6 is covered by such elastic member 7. The seal member 5 referred to above is formed by vulcanizing and molding a rubber material and, during this vulcanization and molding, the core metal 6, made of a metallic material, is bonded to the elastic member 7. It is to be noted that the seal member 5 shown in Fig. 2 is in a natural condition before it is incorporated in the outer ring 2. After the incorporation of the seal member 5, a projecting section 16 of the seal lip portion 9 is held in contact with an outer peripheral surface of the inner ring 1.

The base end portion 11 of the seal member main body 8 includes a thick-walled section 12 continued to the intermediate portion 10 referred to above, and a fitting section 13 that extends radially outwardly from the thick-walled section 12 and fitted into the seal mounting groove 2b. This fitting section 13 is so formed to have a drag-rotation preventive fitting structure, which prevents a circumferential movement relative to the outer ring 2, as a result of the drag-rotation during the sliding contact of a projecting section, as will be described later, of the seal lip portion 9. The thick-walled section 12 of the base end portion 11 has such a sectional shape as to be tapered towards the fitting section 13. In other words, as best shown in Fig. 3, an outer face 12a of the thick-walled section 12, which lies on an outer side remote to the bearing space, has such a sectional shape as to incline towards the opposite side adjacent to the bearing space as it goes towards a fitting section 13 side, that is, in a direction radially outwardly of the fitting section 13. This fitting section 13 has a wall thickness identical with the minimum axial thickness t1 in the thick-walled section 12 and is defined as extending radially outwardly from the thick-walled section 12. It is to be noted that at the time prior to the base end portion 11 of the seal member main body 8 being fixed to the seal mounting groove 2b, the fitting section 12 has an outer face on one side remote from the bearing space, which face is formed to extend substantially parallel in a bearing diametric direction, as shown by the single dotted lines in Fig. 3.

As shown in Fig. 2, the core metal 6 has a cylindrical portion 6a, the upright portion 6b and an inclined portion 6c that are located in this order from an outer diametric side. The upright portion 6b is disposed substantially parallel to end faces of the inner and outer rings 1 and 2 at a location axially inwardly of the end faces. This upright portion 6b has a base end continued to the cylindrical portion 6a and cooperates with the cylindrical portion 6b to represent an L-shaped sectional shape. The upright portion 6b also has a tip end continued to the inclined portion 6c that is inclined axially inwardly as it goes towards an inner diametric side. The cylindrical portion 6a is embedded in the thick-walled section 12 of the base end portion 11 of the seal member main body 8 and the upright portion 6b and the inclined portion 6c are embedded in the intermediate portion 10. In other words, in the instance as shown, the structure is such that any portion of the core metal 6 are not embedded in the fitting section 13 of the base end portion 11 and the seal lip portion 9.

As shown in Fig. 3, of the base end portion 11 of the seal member main body 8, the fitting section 13 has an axial thickness t2 which is set to a value within a range of 70 to 95 % of a widthwise dimension H1 of an open edge of the seal mounting groove 2b, whereby the previously described drag-rotation preventive fitting structure is formed. More specifically, the axial thickness t2 of the fitting section 13 is made thicker by a predetermined thickness (for example, 0.1 mm) than an axial thickness of the fitting section of the seal member main body in the conventional rolling bearing assembly of the same size as that of the rolling bearing assembly referred to in this embodiment.

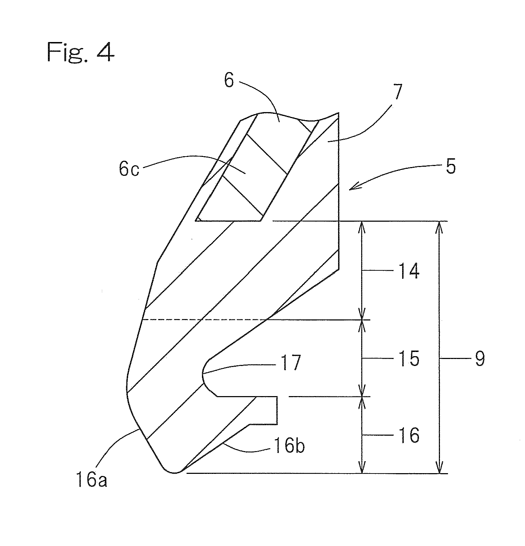

As shown in Fig. 4, the seal lip portion 9 has a lip main body section 9a and the projecting section 16 that are located in this order from the outer diametric side. The lip main body section 9a in turn has a lip base end segment 14 and a waist segment 15 that are located in this order from the outer diametric side. The lip base end segment 14, the waist segment 15 and the projecting section 16 are formed integrally together. The lip base end segment 14 extends a predetermined length radially inwardly beyond an inner peripheral edge of the inclined portion 6c of the core metal 6 to define a diametric base end area of the seal lip portion 9. This lip base end segment 14 has such a sectional shape as to be thinner as it goes towards a radially inward tip end, that is, towards the waist segment 15. Also, inner and outer side faces of the lip base end segment 14, which are oriented towards the bearing space and away from the bearing space, respectively, have such a sectional shape as to be inclined axially inwardly as they go towards the radially inward tip.

The waist segment 15 assumes a radially intermediate area of the seal lip portion 9 and lies intermediate between the lip base end segment 14 and the projecting section 16. In a condition with the base end portion 11 of the seal member main body 8 being fixedly press-fitted in the seal mounting groove 2b, the projecting section 16 of the seal lip portion 9 contacts the inner ring 1 under interference. Along therewith, the seal lip portion 9 assumes a bent shape to depict a V-sectioned shape deflected at the waist segment 15, so that a relief recess 17 is formed in an outer side face with respect to the bearing space. The relief recess 17 in this case is a recess formed not only in the outer side face of the waist segment 15, but in a surface area which is represented by a combination of an outer side face of the waist segment 15 and the outer side face of the lip base end segment 14. It is to be noted that the term "under interference" referred to hereinabove and hereinbelow should be understood as speaking of a condition in which the tip end of the projecting section 16 is positioned radially inwardly of the inner ring outer peripheral surface 1b shown in Fig. 2.

The waist segment 15 has such a sectional shape as to allow a radially intermediate region of the waist segment 15 to have the smallest thickness and the thickness of the waist segment 15 to increase towards the opposite ends of the waist segment 15. The projecting section 16, which is a portion on a tip end side of the waist art 15, is of a shape tapering towards the tip end thereof with its thickness progressively decreasing. An inner side face 16a of the projecting section 16 on one side adjacent the bearing space has such a sectional shape as to incline an axially outwardly as it goes towards the inner diametric side tip end while an outer side face 16b of the projecting section 16 on one side adjacent a bearing outside has such a sectional shape as to incline axially inwardly as it goes towards the inner diametric side tip end. Accordingly, the projecting section 16 assumes a tapered shape similar to a triangular sectional shape with its thickness decreasing in the axial direction towards the tip end, and the contact pressure, with which the projecting section 16 can be frictionally worn, is accordingly easily acted upon the seal lip portion 9.

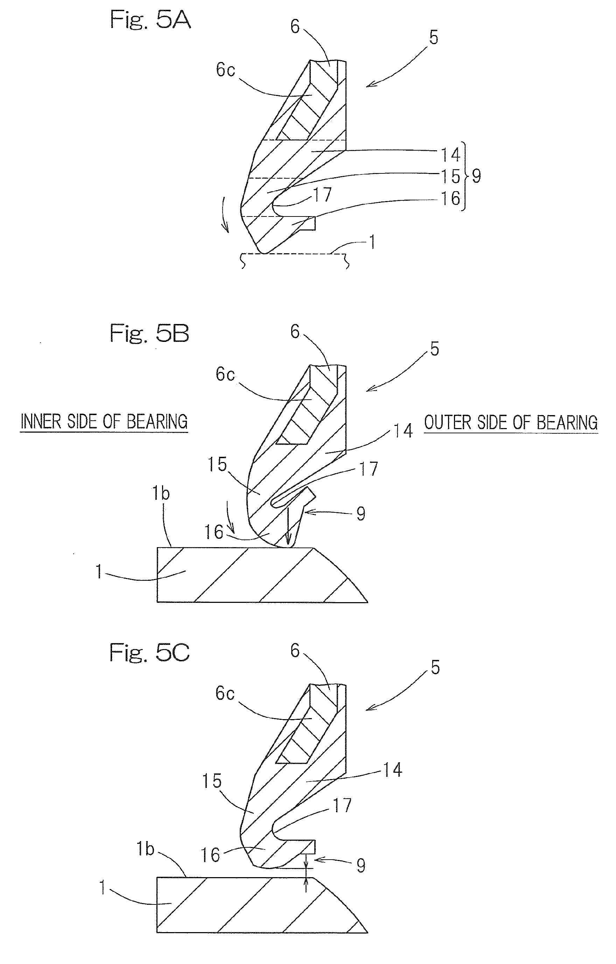

Referring to Figs. 5A to 5C, the projecting section 16 is made of a highly frictionally wearable material, in which the projecting section 16 wears, when the bearing assembly is used in a rotating condition, to form a non-contact or a light contact of a contact pressure substantially equal to zero. Although in the instance now under discussion the highly frictionally wearable material referred to above has been described as provided only in the projecting section 16 which is a portion on the tip end side, the use thereof is not necessarily limited to that shown and described. By way of example, both of the projecting section 16 and the waist segment 15 may be made of the highly frictionally wearable material, or the entire seal lip portion 9 including the projecting section 16, the waist segment 15 and the lip base end segment 14 may be made of the highly frictionally wearable material. The highly frictionally wearable material referred to above may include a highly frictionally wearable rubber material. Other than that, the highly frictionally wearable material may include a material such as, for example, resinous material, solid lubricant material, non-woven cloth or soft steel may be employed. Where the resinous material is used for the highly frictionally wearable material, with the use of an injection molding mold assembly not shown, the seal member 5 may be formed by injecting the resinous material into the mold assembly.

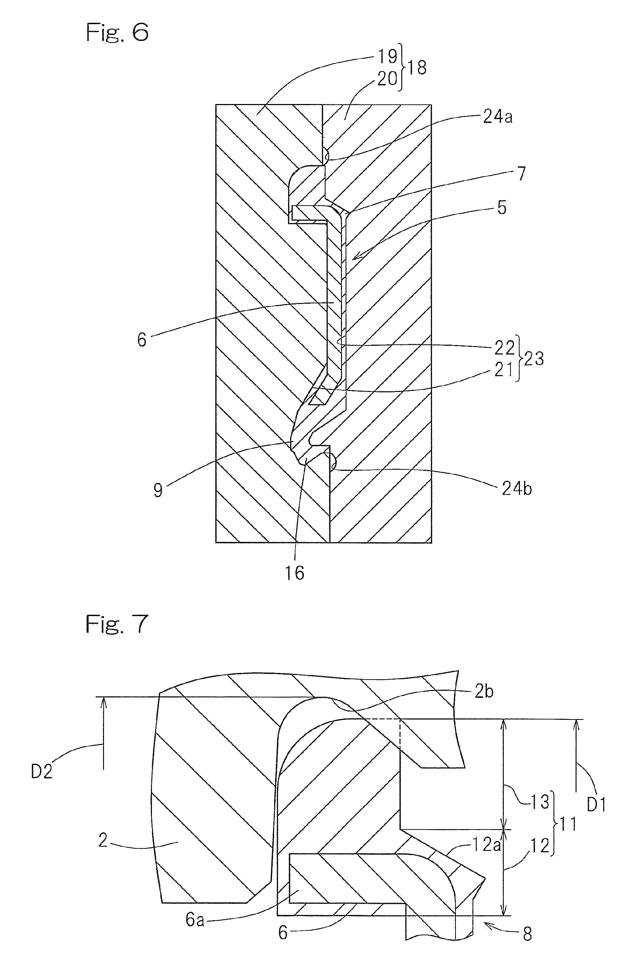

As shown in Fig. 6, a seal forming mold assembly 18 for molding the seal member 5 includes, for example, two molds 19 and 20 that can be mated together. One mold 19 of the molds 19 and 20 has an annular cavity area 21 defined therein to eventually form an inner side face portion of the seal member 5 and the other mold 20 has an annular cavity area 22 defined therein to eventually form an outer side face portion of the seal member 5. In a condition with those two molds 19 and 20 mated together, a molding cavity 23 which eventually define the seal member 5 is formed in the mold assembly. In a seal forming mold assembly 18, annular gates 24a and 24b, through which the material for the elastic member 7 is injected into the molding cavity 23, are formed in the neighborhood of in an outer peripheral side portion and an inner peripheral side portion of the molding cavity 23.

The projecting section 16, to which the highly frictionally wearable rubber material referred to above is adopted, and the other sites of the elastic member 7, to which a rubber material is adopted are molded by means of, for example, two-color molding with the use of the seal forming mold assembly 18. At the outset, the rubber material is injected from one of the gates, for example, the gate 24a adjacent an outer peripheral side portion of the molding cavity 23 to form such other sites of the elastic member 7 which will become a primary side. Then, the highly frictionally wearable rubber material is poured from the other gate 24b adjacent an inner peripheral side portion of the molding cavity 23 to form the projecting section 16 of the seal lip portion 9 which will become a secondary side. It is to be noted that the injection of the materials into the molding cavity 23 may be reversed in sequence to that described above, that is, the pouring of the highly frictionally wearable rubber material from the gate 24b adjacent the inner peripheral side portion of the molding cavity 23 to form the projecting section 16 may be followed by the pouring of the rubber material from the gate 24a adjacent the outer peripheral side portion of the molding cavity 23 to form the other sites of the elastic member 7 than the projecting section 16. In either case, with the use of one seal forming mold assembly 18, the projecting section 16 made of the highly frictionally wearable rubber material and the other sites made of the rubber material can be molded integrally together.

Effects delivered by the foregoing embodiments will now be described. As shown in Figs. 5A and 5B, the seal member 5, which is of the contact type at the initial stage, becomes the seal member 5 of a non-contact type or a light contact type as a result of the frictional wear, as shown in Fig. 5C, after the operation. In other words, when the bearing assembly is used in a rotating condition, the projecting section 16 of the seal lip portion 9 is frictionally worn. Since the previously described drag-rotation preventive fitting structure, in which during the operation of the bearing assembly, the fitting section 13, fitted under interference fit into the seal mounting groove 2b as shown in Figs. 2 and 3, is so designed as to undergo no circumferential movement relative to the outer ring 2 during the sliding contact of the projecting section 16, is employed, the constraining force of the seal member 5 can be enhanced. In this instance, when the axial thickness t2 of the fitting section 13 is chosen to be within a range of 70 to 95 % of the widthwise dimension H1 of the open edge of the seal mounting groove 2b, the previously described drag-rotation preventive fitting structure is formed. Even when the sealing lip torque is high, the fitting section 13 of the seal member main body 8 does hence maintains the condition in which it is fitted into the seal mounting groove 2b in the outer ring 2. Accordingly, during the operation of the bearing assembly, the inner ring 1 is moved relatively and assuredly in the circumferential direction relative to the projecting section 16 of the seal lip portion 9 to allow the projecting section 16 of the seal lip portion 9 to be frictionally worn. Thus, not only can the torque reduction be accomplished, but also the capability of preventing the ingress of the foreign matter can be enhanced.

Hereinafter, other embodiments will be described, noting that component parts similar to those shown and employed in connection with the previously described embodiment of the present invention are designated by like reference numerals and the details thereof are therefore not reiterated for the sake of brevity. It is also to be noted that where only a part of the construction is described, the remaining part of the construction is to be understood as similar to that in the preceding embodiment or embodiments. It is again to be noted that it is possible not only to combine components specifically described in connection with each of the foregoing and following embodiments of the present invention, but also to partially combine two or more of the foregoing and following embodiments of the present invention provided that such combination does not result in disagreement.

As shown in Fig. 7 in connection with the second embodiment, the drag-rotation preventive fitting structure may be accomplished when the outer diametric dimension D1 of the fitting section 13 of the seal member main body 8 is chosen to be equal to or greater than 95% and less than 100% of the diametric diameter D2 of the groove bottom in the seal mounting groove 2b. More specifically, the outer diametric dimension D1 of the fitting section 13 is so formed as to have a value that is larger by a predetermined length (for example, 0.3 mm) than the outer diametric dimension of the fitting section of the seal member main body employed in the conventional rolling bearing assembly of the same size. Even in this case, the constraining force of the seal member 5 can be enhanced. Such being the case, even though the sealing lip torque is high, the fitting section 13 of the seal member main body 8 maintains the condition in which it is fitted into the seal mounting groove 2b in the outer ring 2. It is to be noted that if the axial thickness of the fitting section 13 is so chosen as to be within a range of 70 to 95 % of the widthwise dimension of the open edge of the seal mounting groove 2b and, at the same time, the outer diametric dimension D1 of the fitting section 13 is so chosen as to be equal to or greater than 95% and smaller than 100 % of the diametric dimension D2 of the groove bottom of the seal mounting groove 2b, the previously discussed drag-rotation preventive fitting structure can be accomplished. In such case, the constraining force of the seal member 5 can be further enhanced.

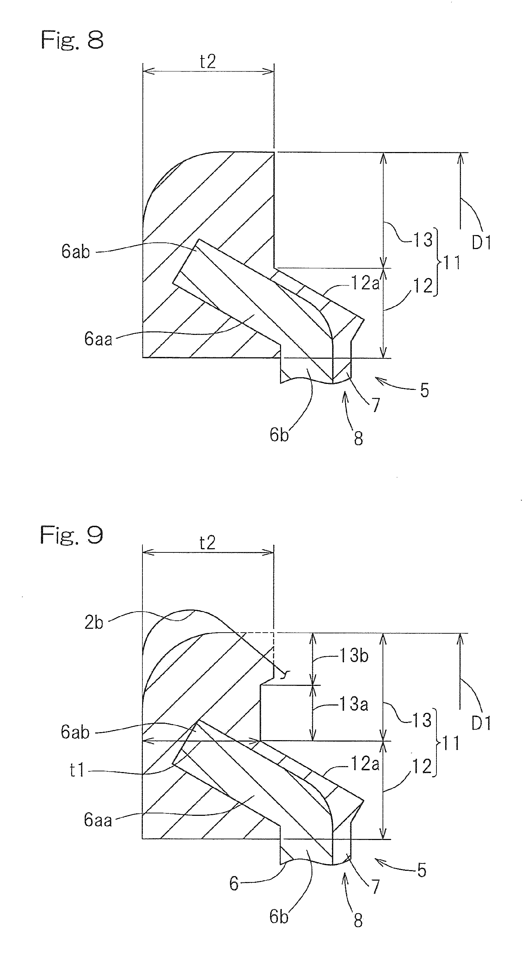

As shown in Fig. 8 in connection with a third embodiment, the core metal 6 may include a thick-walled section embedded segment 6aa, which is embedded in the thick-walled section 12, and a fitting section-embedded segment 6ab integral with this thick-walled section embedded segment 6aa and embedded in the fitting section 13. Also, each of the thick-walled section embedded segment 6aa and the fitting section-embedded segment 6ab has a sectional shape inclined inwardly of the bearing assembly as it goes towards a tip end. As compared with each of the previously described embodiments, since the core metal 6 includes the fitting section-embedded segment 6ab embedded in the fitting section 13, the rigidity of the base end portion 11 of the seal member main body 8 can be further increased. In addition, thanks to the thick-walled section embedded segment 6aa and the fitting section-embedded segment 6ab having the inclined sectional shape as described above, the rigidity of the base end portion 11 of the seal member main body 8 can be further increased. Accordingly, it becomes possible to enhance the constraining force of the seal member 5 to a value higher than that afforded in the conventional technique.

As shown in Fig. 9 in connection with a fourth embodiment, the fitting section 13 of the base end portion 11 may have a radially extending connecting segment 13a, which is continued to the thick-walled section 12 and has a wall thickness equal to the minimum axial thickness t1 in the thick-walled section 12, and a thick-walled section embedded segment 13b so formed as to extend radially from the connecting segment 13a and as to have a wall thickness greater than that of the connecting segment 13a. In this case, the thick walled fitting section 13b of the fitting section 13 fixedly and firmly press-fitted into the seal mounting groove 2b. Accordingly, the constraining force of the seal member 5 is increased as compared with the conventional technique. In the example as shown in Fig. 9, since the rigidity of the base end portion 11 of the seal member main body 8 can be further enhanced thanks to the thick-walled section embedded segment 6aa and the fitting section-embedded segment 6ab, both having the inclined sectional shape in the core metal 6, it becomes possible to further enhance the constraining force of the seal member 5.

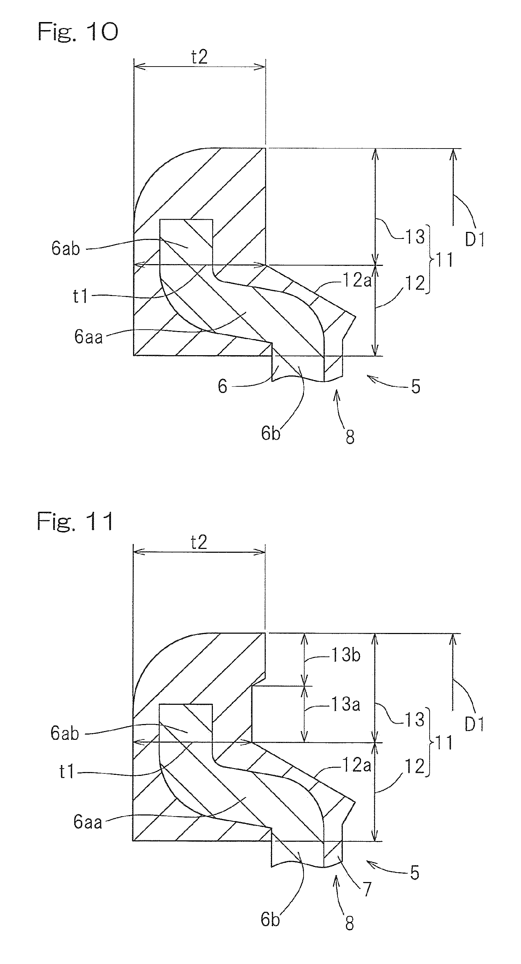

In a fifth embodiment shown in Fig. 10, the thick-walled section embedded segment 6aa of the core metal 6 may have a sectional shape inclined inwardly of the bearing assembly as it goes towards the fitting section-embedded segment 6ab and the fitting section-embedded segment 6ab of the core metal 6 may have a sectional shape in the form of an upright shape extending radially towards its tip end. In this case, when a bend is formed between the thick-walled section embedded segment 6aa and the fitting section-embedded segment 6ab, the strength of the core metal itself can be increased as compared with that when it is flat. Also, since the fitting section-embedded segment 6ab having the sectional shape in the form of the upright plate shape is embedded in the fitting section 13, the rigidity of the base end portion 11 of the seal member main body 8 can be further increased. Accordingly, it becomes possible to further enhance the constraining force of the seal member 5.

As illustrated in an a sixth embodiment shown in Fig. 11, in the structure shown in and described with particular reference to Fig. 10, the fitting section 13 may include a radially extending connecting segment 13a, continued from the thick-walled section 12 and having its wall thickness equal to the minimum axial thickness t1 of the thick-walled section 12, and a thick walled fitting section 13b so formed as to extend radially from the connecting segment 13a and as to have a wall thickness greater than that of the connecting segment 13a.

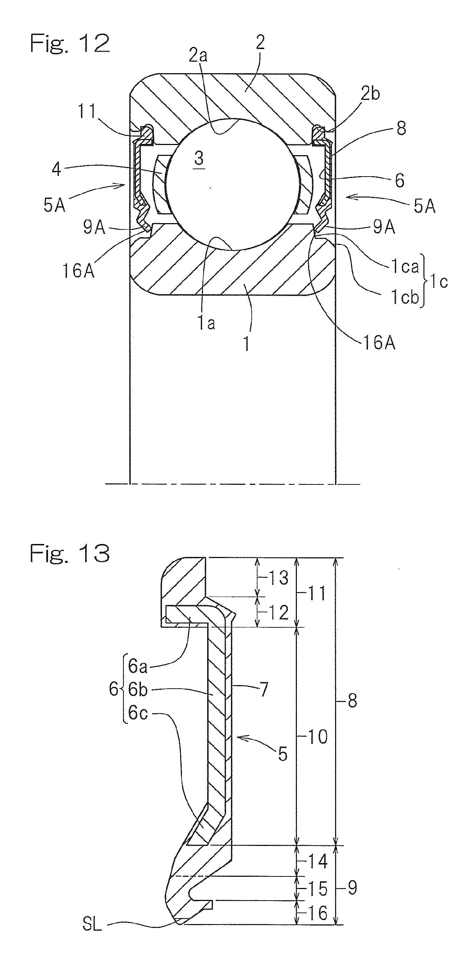

As illustrated in a seventh embodiment shown in Fig 12, the seal lip portion 9A may be so shaped as to contact the inner ring 1 in an axial direction. In this example, a sealing groove 1c is provided in an inner ring outer peripheral surface and the sealing groove 1c includes an inclined face 1ca, continued to an inner ring outer diametric surface and a groove bottom face 1cb continued to the inclined face 1ca. The projecting section 16A of the seal lip portion 9A achieves an axial contact with the inclined face 1ca. The projecting section 16A is so formed as to incline axially inwardly as it goes towards an inner diametric side tip end. A corner area delimited between a bottom face and an inner side face of the projecting section 16A on the side of the bearing space is adapted to contact the inclined face 1ca of the inner ring seal groove 1c in the axial direction.

Even in the case where the seal lip portion 9A is so shaped as to contact in the axial direction as described above, since the base end portion 11 of the seal member main body 8 is so designed as to accomplish the drag-rotation preventive fitting structure as hereinbefore described in any one of the previous embodiments of the present invention, the constraining force of the seal member 5A can be enhanced. In view of the above, during the operation of the bearing assembly, even when the sealing lip torque is high, the inner ring 1 is moved relatively and assuredly in the circumferential direction relative to the projecting section 16A of the seal lip portion 9A to allow the projecting section 16A of the seal lip portion 9A to be assuredly worn frictionally.

As illustrated in Fig. 13 which shows an eighth embodiment, a slit SL as an suction preventing unit may be provided in the projecting section 16 of the seal lip portion 9. This slit SL is provided at one location or a plurality of locations in the circumferential direction, whereby in a condition in which the projecting section 16 of the seal lip portion 9 is held in contact with a seal contact surface of the inner ring 1, the bearing space is rendered in a ventilated condition with respect to the inside and outside. Ventilation through the slit SL is effective to prevent the seal member 5 from being sucked onto the inner ring 1 as a result of reduction of the internal pressure which takes place incident to the operation of the bearing assembly. It is to be noted that it is possible to provide the seal groove in the inner ring outer peripheral surface 1b and to shape the projecting section 16 of the seal lip portion 9 to represent such a shape as to permit it to contact in the radial direction.

The following Tables 1 and 2 illustrate actually measured values of slip torques and calculated values of calculated slip torque of each of the outer rings, shown in and described with reference to Figs. 3 and 7 to 11, which values have been measured in connection with the rolling bearing assembly of a size, 35 mm in inner diameter, 72 mm in outer diameter and 17 mm in width. Each of those values is expressed in terms of scale relative to the conventional product shown in Fig. 16. According to those actually measured values and the calculated values, the outer ring slip torque can be increased as compared with the conventional counterparts.

**Table 1**

| Examples of Dimensional Changes (Actually Measured Values) | Outer Ring Slip Torque |
|---|---|
| Axial Thickness t2 in Fig. 3 (+ 0.1 mm) increased | 1.26 times (Against Current Product of Fig. 16) |
| Outer Diametric Dimension D 1 in Fig. 7 (+ 0.3 mm) increased | 1.71 times (Against Current Product of Fig. 16) |

**Table 2**

| Ex. of Change in Core Metal (Calculated Values) | Outer Ring Slip Torque |
|---|---|
| Fig. 8 (Core Metal Changed) | 1.01 times (Against Current Product of Fig. 16) |
| Fig. 9 (Core Metal + Rubber Shape Changed) | 1.07 times (Against Current Product of Fig. 16) |
| Fig. 10 (Core Metal Changed) | 1.10 times (Against Current Product of Fig. 16) |
| Fig. 11 (Core Metal + Rubber Shape Changed) | 1.12 times (Against Current Product of Fig. 16) |

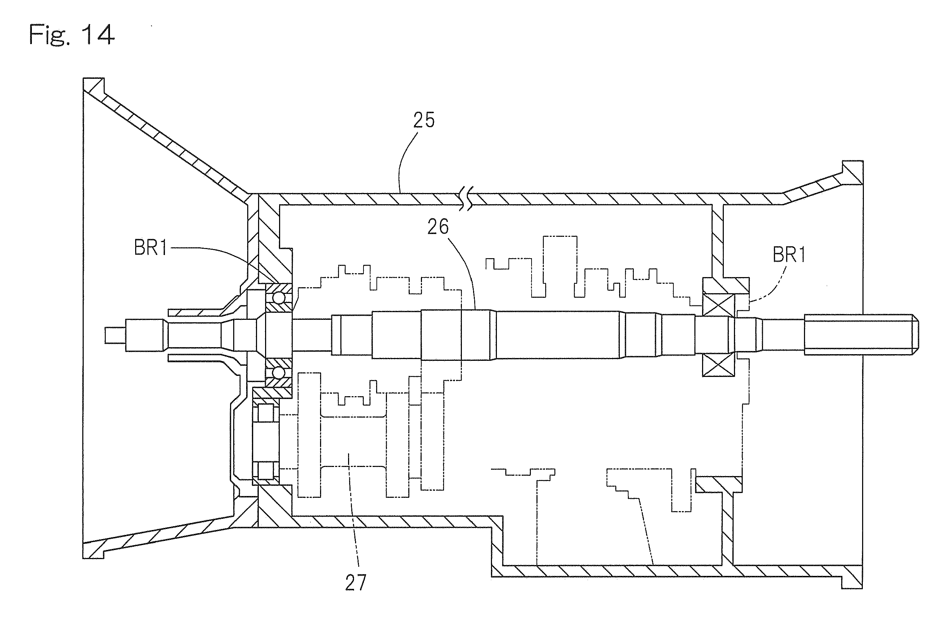

Fig. 14 illustrates a schematic diagram, showing one example in which the rolling bearing assembly, designed in accordance with any one of the previously described embodiments, is incorporated in a transmission used in an automotive vehicle. Fig. 14 illustrates one example of an automatic transmission. Respective outer rings of the respective rolling bearing assemblies BR1 and BR1 are mounted on axially opposite ends of a casing 25, and opposite ends of a main shaft 26 are rotatably supported by respective inner rings of those rolling bearing assemblies BR1 and BR1. A countershaft 27 is provided in the casing 25 so as to extend parallel to the main shaft 26. This countershaft 27 has a gear part meshed with a gear part of the main shaft 26 and is rotatably supported by the casing 25 through a bearing assembly.

Where the rolling bearing assemblies BR1 and BR1 are incorporated in the transmission in the automotive vehicle, due to the drag-rotation preventive structure, even though the sealing lip torque is high during the operation of each of the bearing assemblies, the fitting section 13 of the seal member main body 8 in each of the rolling bearing assemblies BR1 and BR1 maintains the condition as fitted into the associated seal mounting groove 2b in the manner as hereinbefore described in connection with any one of the previously described embodiments. Accordingly, during the operation of each of the bearing assemblies BR1 and BR1, it is possible to cause the associated projecting section 16 (or 16A) of the seal lip portion 9 to frictionally wear by relatively and assuredly moving the inner ring 1 in the circumferential direction with respect to the projecting section 16 (or 16A) of the seal lip portion 9. Therefore, not only can the sealing torque be reduced, but the capability of preventing the ingress of the foreign matter can also be increased. Since the reduction of the sealing torque is expected, the mileage of the automotive vehicle can be increased. Also, the foreign matter such as, for example, wearable particles of gears within the transmission can be assuredly prevented from ingreing into the bearing assembly. It is to be noted that each or the rolling bearing assembly designed in accordance with any one of the previously described embodiments may be employed in any one of the continuously variable speed transmission and the manually shiftable transmission.

Although the present invention has been fully described in connection with the embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: Inner ring
- 2: Outer ring
- 1a, 2a: Raceway
- 2b: Seal mounting groove
- 3: Rolling element
- 5: Seal member
- 6: Core metal
- 6aa: Thick-walled section embedded segment
- 6ab: Fitting section-embedded segment
- 8: Seal member main body
- 9: Seal lip portion
- 9a: Lip main body
- 11: Base end portion
- 12: Thick-walled section
- 13: Fitting section
- 16, 16A: Projecting section

## Claims

1. A rolling bearing assembly comprising:
an inner ring and an outer ring,
a plurality of rolling elements interposed between a raceway in the inner ring and a raceway in the outer ring, and
a seal member to seal a bearing space that is delimited between the inner and outer rings;
the seal member including a seal member main body having its base end portion fixedly press-fitted into a seal mounting groove defined in one of the raceway rings, which is either the inner ring or the outer ring, and the seal member main body having a tip end provided with a seal lip portion that contacts the other of the raceway rings;
the seal lip portion including a lip main body section and a projecting section protruding in a radial direction from a peripheral edge of the lip main body section and slidingly contacting the other of the raceway rings, and
the projecting section being made of a highly frictionally wearable material which wears, when the bearing assembly is used in a rotating condition, to form a non-contact or a light contact of a contact pressure substantially equal to zero,
wherein a fitting section of the seal member main body, which is fitted into the seal mounting groove has a drag-rotation preventive fitting structure that prevents a circumferential movement relative to the one of the raceway rings, as a result of a drag-rotation during the sliding contact of the projecting section.

2. The rolling bearing assembly as claimed in claim 1, wherein the base end portion of the seal member main body of the seal member includes a thick-walled section continued to a radially intermediate portion of the seal member main body and the fitting section extending radially from the thick-walled section, and the seal member main body includes a core metal, the core metal being provided with a fitting section-embedded segment that is embedded in the fitting section to form the drag-rotation preventive structure.

3. The rolling bearing assembly as claimed in claim 1, wherein the thick-walled section of the base end portion has a sectional shape narrowing to taper as it goes towards the fitting section and the fitting section includes a connecting segment continued from the thick-walled section so as to extend radially and having a wall thickness equal to a minimum axial wall thickness of the thick-walled section, a thick-walled fitting section extending radially from the connecting segment and formed to have a wall thickness greater than that of the connecting segment.

4. The rolling bearing assembly as claimed in claim 2, wherein the core metal includes a thick-walled section embedded segment that is embedded in the thick-walled section, and a fitting section-embedded segment that is integral with the thick-walled section embedded segment and embedded in the fitting section, each of the thick-walled section embedded segment and the fitting section-embedded segment having a sectional shape inclined towards the inside of the bearing assembly as it goes towards a tip end.

5. The rolling bearing assembly as claimed in claim 2, wherein the core metal includes a thick-walled section embedded segment that is embedded in the thick-walled section, and a fitting section-embedded segment that is integral with the thick-walled section embedded segment and embedded in the fitting section, the thick-walled section embedded segment having a sectional shape that is inclined towards the inside of the bearing assembly as it goes towards the fitting section-embedded segment while the fitting section-embedded segment having a sectional shape of an upright wall shape extending radially towards a tip end.

6. The rolling bearing assembly as claimed in claim 1, wherein the fitting section has an axial thickness chosen to be within a range of 70 to 95 % of a widthwise dimension of an open edge of the seal mounting groove.

7. The rolling bearing assembly as claimed in claim 1, wherein the fitting section has an outer diametric dimension chosen to be within a range of equal to or greater than 90 % and smaller than 100 % of a diametric dimension of a groove bottom of the seal mounting groove.

8. The rolling bearing assembly as claimed in claim 1, wherein the seal lip portion is of a shape contacting the other of the raceway rings in a radial direction.

9. The rolling bearing assembly as claimed in claim 1, wherein the seal lip portion is of a shape contacting the other of the raceway rings in an axial direction.

10. The rolling bearing assembly as claimed in claim 1, wherein the highly frictionally wearable material is a rubber material or a resinous material.

11. The rolling bearing assembly as claimed in claim 1, further comprising a suction preventing unit provided in the seal member to prevent the seal member from being sucked and adhering to the other of the raceway rings.
